# EUROPÄISCHE PATENTANMELDUNG

(11) **EP 4 372 044 A1**
(43) Veröffentlichungstag der Anmeldung: **22.05.2024**
(21) Anmeldenummer: 22208334.7
(22) Anmeldetag: 18.11.2022
(51) Int. Cl.: C08L 5/08, C08J 5/18, C08L 5/12, C08L 89/00

(54) **VERBUNDWERKSTOFF**

(71) Anmelder: Justus-Liebig-Universität Gießen, 35390 Gießen (DE)
(72) Erfinder: Pohlon, Elisabeth, 35037 Marburg (DE)
(74) Vertreter: Stumpf, Peter

(57) **Zusammenfassung**

Das erfindungsgemäße Stoffgemisch für die Herstellung eines Verbundwerkstoffes umfasst die folgenden Komponenten: Wasser, Geliermittel mit einem Massenanteil von 0,01% bis 6%, Algen mit einem Massenanteil von 0,01% bis 0,8%, Cyanobakterien mit einem Massenanteil von 0,01% bis 0,8% und Chitin mit einem Massenanteil von 0,05% bis 3,0%. Der aus diesem Stoffgemisch erzeugte Verbundwerkstoff kann in beliebige Formen verarbeitet werden und beispielsweise für die Herstellung von Platinen, Verpackungsmaterial, Papier oder als gelartiges Verbandsmaterial oder Applikator für Medikamente auf Hautoberflächen verwendet werden.

## Beschreibung

Die vorliegende Erfindung betrifft ein Stoffgemisch zur Herstellung eines Verbundwerkstoffs aus Komponenten oder Rohstoffen, welche aus nachwachsenden oder regenerativen Quellen stammen. Die Erfindung betrifft auch ein Herstellungsverfahren, mit dem aus dem erfindungsgemäßen Stoffgemisch ein Verbundwerkstoff hergestellt wird. Bei dem erfindungsgemäßen Verbundwerkstoff handelt sich um einen bio-basiertem Kunststoff, der auf Basis von nachwachsenden (regenerativen) Rohstoffen erzeugt wird.

### Beschreibung und Einleitung des allgemeinen Gebietes der Erfindung

Produkte aus Plastik haben in den letzten 100 Jahren den Markt erobert. Im Jahr 2015 erreichte die weltweite Produktion von Plastik eine Masse von 381 Millionen Tonnen (t). Demgegenüber stehen große Mengen an Plastikmüll, die nicht professionell entsorgt werden können. Beispielsweise wurden im Jahr 2010 270 Millionen Tonnen Plastik produziert. Die geschätzte Menge an Plastikmüll, die ins Meer gelangt, beträgt zwischen 4,8-12,7 Millionen Tonnen.

Doch nicht nur die Meere sind stark durch den Müll verunreinigt, Plastikmüll ist inzwischen in nahezu allen Ökosystemen wie beispielsweise Süßwasserressourcen und Böden nachgewiesen worden. Daher ist die Produktion und auch die Entsorgung von Plastikprodukten zunehmend zum globalen Problem geworden. Nur etwa 19,5% des Plastikmülls wird recycelt und 25,5% wird verbrannt, der Rest wird weggeworfen. Auch wenn in der EU die Handhabung für den Umgang mit Plastikmüll über diverse Richtlinien geregelt ist, geht nur ein sehr geringer Prozentsatz an Altplastik wieder in die Produktion. Eine besondere Herausforderung für das Recycling von Plastik sind Verbundmaterialien für die Elektrotechnik. Im Jahr 2015 wurden global 250 Millionen Tonnen Plastik in Kombination mit Elektronik produziert. Recyclingmethoden für Elektroschrott können physikalischer, chemischer und biologischer Natur sein. Methoden, die auf mechanischen Prozessen basieren, sind mit hohen Kosten und einem beträchtlichen Gesundheitsrisiko verbunden. Die Ausbeute an rückgewonnenem Metall ist aber gering. Chemische Methoden zur Metallrückgewinnung sind schneller, bergen aber, durch die Entsorgung der Chemikalien, ein hohes Umweltrisiko. Bei diesen Methoden spielen aber ausschließlich die Rückgewinnung und Wiederverwendung der Metallkomponenten eine Rolle.

### Stand der Technik

Die Produktion von alternativen, umweltverträglichen plastikähnlichen Werkstoffen hat einen hohen gesellschaftlichen Stellenwert. Umweltverträgliches Plastik (Synonyme: Biokunststoff, Bioplastik, bio-basierter Kunststoff, technische Bio-Polymere, bioplastics, bio-based plastics) basiert derzeit vor allem auf Verwendung von umweltverträglichen Polymeren u.a. aus Stärke, Zellulose oder Aminosäuren. Umweltverträgliches Plastik wird aus natürlichen nachwachsenden Rohstoffen hergestellt und soll recycelbar bzw. biologisch abbaubar sein.

Konventionelle Plastikprodukte können in verschiedene Klassen eingeteilt werden, entsprechend der Herstellung und Verwendung. Daher sollten alternative Produkte ähnliche Eigenschaften aufweisen. Materialien aus Polymer-Metall-Werkstoffen erfreuen sich hoher Beliebtheit insbesondere in der Elektrotechnik. Daher sollten neuartige Produkte neben der Umweltverträglichkeit auch dieselben Eigenschaften und Verarbeitungsmöglichkeiten aufweisen wie synthetische Materialien. Da konventionelle Plastikprodukte inzwischen in allen Lebensbereichen des Menschen Anwendung finden, steht die Entwicklung von alternativen Materialien vor einer großen Herausforderung. Biokunststoff findet derzeit hauptsächlich Anwendung als Verpackungsmaterial, Spielzeug, Geschirr oder für medizinische Applikationen.

Kunststoffe sind organische Polymere (Strukturpolymere), die sich zu konkreten Produkten verarbeiten lassen. Weitere organische Polymere sind Elastomere, Kunstfasern und Funktionspolymere. Für die Produktion dieser organischen Polymere werden heute schon große Mengen nachwachsender Rohstoffe eingesetzt. Vor dem Hintergrund wachsender Marktanteile für biobasierte Produkte stellt sich die Frage nach der Verfügbarkeit von Agrarflächen, sodass es hier vorteilhaft ist, Organismen zur Herstellung organischer Polymere einzusetzen, welche keine zusätzliche Agrarfläche benötigen.

Bei derzeitigen Bioplastikprodukten werden hinsichtlich der zur Herstellung verwendeten Ressourcen sechs Kategorien unterschieden. Zu den Ressourcen gehören Stärke, Zellulose, aliphatische Polyester, Proteine, Lignin und Chitin. Auch hinsichtlich der Herstellung von Bioplastik gibt es unterschiedliche Typen. Bioplastik wird derzeit aus Polymeren hergestellt, die entweder direkt aus Biomasse, intermediären Produkten oder aus durch Mikroorganismen produzierte Polymere hergestellt werden. Dabei hat sich gezeigt, dass die Herstellung von Bioplastik einerseits auf Kosten von Nahrungsquellen gehen kann, was sehr aufwändig ist und die Zersetzung durchaus schädlich für die Umwelt sein kann bzw. sich nicht von konventionellem Plastik unterscheidet.

Daher müssen neue Wege für die Herstellung und das Recycling von Biokunststoffen gefunden werden. Eine mögliche Grundlage für die Herstellung von Biokunststoffen sind Algen. Algen haben im Allgemeinen eine kurze und hohe Wachstumsrate und erfordern eher anspruchslose Kultivierungsbedingungen. Die Biokunststoffherstellung im Meerwasser umgeht damit die Problematik um Ackerfläche und Süßwasserverbrauch. Die Herstellung von Biokunststoff aus Algen ist grundsätzlich bekannt. Es gibt Verfahren, bei denen Algen als Ausgangsmaterial für Biokunststoff dienen. Dabei werden Salzwasser-Algen als Kohlenstoff lieferanten genutzt. Der dabei hergestellte Kunststoff ist Polyhydroxyalkanoat (PHA, Polyhydroxyfettsäure, PHF).

Die Schwierigkeit hier ist, dass mit einem Produktionsverfahren meist nur genau ein Biokunststoff hergestellt werden kann und die Eigenschaften (z.B. die mechanischen Eigenschaften) nicht so einfach wie bei Verbundwerkstoffen durch eine Variation der Materialkomposition optimiert werden können. Weiterhin sind übliche Biokunststoffe für viele Anwendungsfälle nicht stabil genug. Außerdem zeigen manche Biokunststoffe, insbesondere jene, die auf Extrakten von Zellulose und Stärke basieren, ähnlich toxische Effekte wie konventionelle Plastikprodukte. An Füllstoffen für Verbundmaterialien sind im Stand der Technik lediglich anorganische und organische Stoffe bekannt, die in entsprechenden klassischen chemischen Produktionsverfahren kostenaufwendig hergestellt werden müssen. Der direkte Einsatz von Mikroorganismen als Füllstoffe für Verbundwerkstoffe ist im bisherigen Stand der Technik unbekannt.

### Aufgabe

Die Aufgabe der vorliegenden Erfindung ist es, einen kostengünstigen und einfach herstellbaren Verbundwerkstoff aus nachwachsenden Rohstoffen bereitzustellen, der eine breite Anwendbarkeit zeigt.

### Lösung der Aufgabe

Diese Aufgabe wird erfindungsgemäß gelöst durch das in Patentanspruch 1 angegebene Stoffgemisch für die Herstellung eines Verbundwerkstoffes und das Verfahren zur Herstellung. Ausführungsbeispiele der Erfindung sind in den Unteransprüchen angegeben.

Der Verbundwerkstoff hat den Vorteil, dass seine Komponenten recycelbar oder kompostierbar sind. Ein weiterer wichtiger Aspekt ist, dass weder die Nutzung noch die Zersetzung des Verbundwerkstoffs bei bestimmungsgemäßer Verwendung bzw. Entsorgung umweltschädlich ist. Der Verbundwerkstoff wird zur Herstellung einer Vielzahl von Produkten verwendet, er zeigt eine breite Einsetzbarkeit.

Die eingesetzten Rohstoffe stammen aus nachwachsenden oder regenerativen Quellen. Alternativ werden sogar aquatische bzw. marine Rohstoffe und aquatische bzw. marine Abfallstoffe sowie Nebenprodukte aus der Nahrungsindustrie für die Herstellung des erfindungsgemäßen Verbundwerkstoffes verwendet. Die Rohstoffe sind daher sehr kostengünstig. Das Herstellverfahren ist sehr einfach und ebenfalls kostengünstig.

Die Angaben zu den Massenanteilen der einzelnen Komponenten des erfindungsgemäßen Stoffgemisches beziehen sich auf das Ausgangsmaterial zu Beginn des Herstellungsprozesses. Je nach Dauer und Temperaturverlauf während des Herstellungsprozesses verändert sich die Zusammensetzung zwischen dem Beginn des Herstellungsprozesses, in dem alle Bestandteile mit Ausnahme von Wasser in Pulverform vorliegen, also getrocknet sind und dem Ende des Herstellungsprozesses. Die Bestandteile sind am Ende des Herstellungsprozesses (d.h. nach dem Trocknungsschritt) gemischt und chemisch und/oder physikalisch miteinander vernetzt. Weiterhin ist der ursprüngliche Massenanteil von Wasser im Stoffgemisch durch das Herstellungsverfahren so stark reduziert worden, dass der relative Anteil an Wasser im Verbundwerkstoff gegenüber den anderen Bestandteilen sehr viel geringer ist. Nach wie vor aber ist der Massenanteil von Wasser im Verbundwerkstoff die Differenz zwischen 100% und der Summe der Massenanteile der anderen Bestandteile. Nach vollständiger Trocknung beträgt die Masse der Werkstoffe etwa 3,6-5,7% des Feuchtgewichtes.

Der erfindungsgemäße Verbundwerkstoff umfasst mindestens folgende Komponenten:
Deionisiertes oder destilliertes Wasser (z.B. Aqua destillata, Aqua dest., A. dest., Aqua purificata): Die Masse des destillierten Wassers wird so berechnet, dass die Summe der einzelnen Komponenten 100% ergibt. Das heißt, der Anteil an Wasser in einem jeden Ausführungsbeispiel ergibt sich jeweils als die Differenz zwischen der Summe aller anderen Einzelbestandteile und 100%.

Geliermittel mit einem Massenanteil zwischen ca. 0,8% bis 3,3%: Wasser und Geliermittel bilden die Grundmatrix des erfindungsgemäßen Verbundwerkstoffes. Geliermittel sind Substanzen, die im Wasser quellen oder Wasser binden und so zur Gelierung führen. Geliermittel werden üblicherweise aus Vielfachzuckern oder pflanzlichen wie tierischen Eiweißen hergestellt und wirken in Emulsionen stabilisierend.

Das bevorzuge Geliermittel für den erfindungsgemäßen Verbundwerkstoff ist dabei Agarose. Dabei weist in einer bevorzugten Ausführungsform des erfindungsgemä-βen Verbundwerkstoffes die Agarose einen Massenanteil zwischen 0,8% bis 3,0% auf. Eine Mischung aus Agarose und Pektin mit einem Massenanteil von 0,3% führt zu mehr elastischen, plastikähnlichen Eigenschaften des Verbundwerkstoffs. Agarose ist ein Polysaccharid aus D-Galactose und 3,6-Anhydro-L-Galactose, die glycosidisch miteinander verbunden sind. Es stellt die Hauptkomponente des Agars dar und wird vor allem aus den Rotalgengattungen Gelidium und Gracillaria gewonnen. Agarose ist ein starker Gelbildner und für die Gelierfähigkeit von Agar verantwortlich. Pektine (auch Pektinstoffe) sind pflanzliche Polysaccharide (Vielfachzucker), genauer Polyuronide, die im Wesentlichen aus α-1,4-glycosidisch verknüpften D-Galacturonsäure-Einheiten bestehen. Agarose ist ein starker Gelbildner und dient in den Gemischen als Vernetzungsgrundlage. Pektin ist härter als Agarose und verleiht dem Gemisch mehr Stabilität, ohne dass die Elastizität leidet. Erfindungsgemäß findet im Rahmen des Herstellungsprozesses sowohl chemische Vernetzung statt (z.B. Kondensationsreaktionen zwischen den einzelnen Bestandteilen des erfindungsgemäßen Stoffgemisches infolge des eintretenden Wasserentzuges) als auch physikalische Vernetzung, beispielsweise Verschlingungen von Molekülen des Gelbildners untereinander. Dem Fachmann ist bekannt, dass aufgrund des beschriebenen Herstellungsverfahrens beide Arten von Vernetzung während der Herstellung des Verbundwerkstoffes nebeneinander stattfinden können. Darüber hinaus bilden sich zwischen den einzelnen Bestandteilen auch Wasserstoffbrückenbindungen aus, da alle Bestandteile des erfindungsgemäßen Stoffgemisches die dafür erforderlichen Substituenten aufweisen.

Die weiteren Komponenten, welche im Herstellungsprozess in diese Grundmatrix eingebettet werden, dienen dazu, die Werkstoffeigenschaften des erfindungsgemä-βen Verbundwerkstoffes zu modifizieren, sodass dieser nach Abschluss des Herstellungsprozesses die gewünschten Eigenschaften aufweist.

Der erfindungsgemäße Verbundwerkstoff umfasst getrocknete Algen mit einem Massenanteil zwischen ca. 0,6% bis 0,8%.

Die Algen dienen ebenfalls dazu, dem Material eine bestimmte Stabilität und Elastizität zu verleihen. Ein höherer Massenanteil erhöht die Elastizität des Verbundwerkstoffes. Diese Eigenschaft lässt sich quantitativ mit dem Elastizitätsmodul, dem Kompressionsmodul und dem Schubmodul beschreiben. Cellulose ist ein wesentlicher Bestandteil pflanzlicher Zellen und spielt insbesondere für die Papierindustrie eine große Rolle. Die reinste Cellulose, das heißt nahezu ohne Begleitsubstanzen, kommt in den Algengattungen Valonia und Cladophora vor.

Vorzugsweise werden im erfindungsmäßen Verbundwerkstoff Algen der Gattung Chlorella verwendet. Chlorella-Arten bilden kugelförmige, einzeln vorliegende Zellen und sind durch Chlorophyll A und B grün. Die Zellen sind mit 2 bis 10 µm Durchmesser sehr klein. Die Zellwand dieser Algengattung besteht aus einem mehrschichtigen Cellulosegerüst, in das Schichten aus polymeren Kohlenwasserstoffketten eingelagert sind. Durch diese kleinsten Cellulosegerüste können sie die mechanischen Eigenschaften des erfindungsgemäßen Verbundwerkstoffes beeinflussen, indem sie seine Stabilität erhöhen. Algen der Gattung Chlorella können kostengünstig kultiviert werden.

Weiterhin umfasst der erfindungsgemäße Verbundwerkstoff Cyanobakterien mit einem Massenanteil von 0,6% bis 0,8%.

Vorzugsweise werden getrocknete Cyanobakterien (früher als Blaualgen bezeichnet) der Gattung Spirulina (Arthrospira) verwendet. Der Zellwandbestandteil dieser Organismengruppe ist nicht Zellulose, sondern Murein, bestehend aus einem Mucopoymer und Polysacchariden. Murein ist weniger spröde als Zellulose und verleiht dem Biofilm mehr Elastizität.

Spirulina bilden eine Gattung der Cyanobakterien. Diese Bakterien bilden mehrzellige, wendelförmige Mikrofilamente. Die zylindrischen Zellen haben einen Durchmesser von etwa 1 bis 5 µm und eine Länge (Höhe) von etwa 1 bis 3 µm. Sie sind hintereinander angeordnet in langen, rechts- oder linkshändig wendelförmigen Filamenten mit einer Länge von 0,5 mm oder mehr und einem Wendeldurchmesser von 5 bis 40 µm. Durch diese Mikrofilamente können die mechanischen Eigenschaften des erfindungsgemäßen Verbundwerkstoffes beeinflusst werden, indem diese seine Stabilität erhöhen. Die in den Verbundwerkstoff eingearbeiteten Spirulina-Filamente wirken daher als sehr effiziente faserförmige Füllstoffe und erhöhen somit beispielsweise auch die Zugfestigkeit des Verbundwerkstoffes. Spirulina kann kostengünstig kultiviert werden.

Beide Taxa (Chlorella sowie Spirulina) werden als Superfood angeboten und sind daher nicht toxisch.

Weiterhin umfasst der erfindungsgemäße Verbundwerkstoffes Chitin mit einem Massenanteil von mindestens 0,05%.

Chitin ist ein Polysaccharid, das aus Acetylglucosamin-Einheiten aufgebaut ist (2-Acetamido-2-desoxy-D-glucopyranose, N-Acetyl-D-glucosamin, GlcNAc). Die Acetylglucosamin-Einheiten sind durch β-1,4-glycosidische Bindungen verknüpft. Dies ist die gleiche Bindungsart wie die der Glucosemoleküle in Cellulose. Chitin kann also als Variante der Cellulose aufgefasst werden, bei der die Hydroxygruppen in Position 2 der Monomereinheiten durch Acetamidogruppen ersetzt wurden. Dadurch wird eine stärkere Wasserstoffbrückenbindung zwischen angrenzenden Polymeren ermöglicht, die Chitin härter und stabiler als Cellulose macht. Im erfindungsgemäßen Verbundwerkstoff dient das Chitin dazu, dem Material Härte und strukturelle Stabilität zu verleihen.

Es werden 3 Formen von Chitin unterschieden. α-Chitin ist die häufigste Form und die Ketten sind antiparallel angeordnet, sodass sie einen orthorhombischen Kristall bilden; man findet es in den Zellwänden von Pilzen und dem Exoskelett von Arthropoden wie Krabben oder Garnelen. Die β-Chitinketten sind in einer parallelen Struktur angeordnet und bilden monokline Kristalle. β-Chitin kann aus Muscheln und Tintenfischen gewonnen werden. γ-Chitin ist die weniger verbreitete Form und weist eine alternative Struktur mit einer antiparallelen Schicht nach zwei parallelen Schichten auf. Es wird aus Pilzen und Hefen gewonnen. Alle drei vorstehend beschriebenen Formen von Chitin können erfindungsgemäß eingesetzt werden und gestatten aufgrund ihres unterschiedlichen strukturellen Aufbaues und der damit verbundenen leicht unterschiedlichen mechanischen Eigenschaften eine sehr fein differenzierte Einstellung der mechanischen Eigenschaften des Verbundwerkstoffes.

Chitin ist in Verbindung mit Protein und Calciumcarbonat weit verbreitet als Bestandteil im Exoskelett vieler Gliederfüßer, vor allem der Klassen (und Überklassen) der Insekten, Spinnentiere, Tausendfüßer und Krebstiere. Bei den Weichtieren ist es als Bestandteil der Radula sowie im Schulp mancher Kopffüßer zu finden. Einige Arten der Gliederfüßer werden in großen Mengen in der Lebensmittelindustrie verwendet. Das Chitin stellt hierbei oftmals ein nicht nutzbares Abfallprodukt dar, welches entsorgt werden muss. Jährlich fallen weltweit zwischen 6-10 Millionen Tonnen chitinhaltige Fischereiabfälle an. Durch die Verwendung im erfindungsgemäßen Verbundwerkstoff kann dieses Nebenprodukt einer sinnvollen wirtschaftlichen Nutzung zugeführt werden.

Im Pilzreich kommt Chitin in einer Reihe niederer Pilze sowie bei Ständerpilzen, Schlauchpilzen und Mucorales als Zellwandkomponente mit Proteinen und Glucanen vor, wobei es nicht in allen dieser Pilze vorkommt. Auch bei engen Verwandten kann sich das Vorkommen von Chitin in der Zellwand erheblich unterscheiden. Damit könnte auch diese Gruppe von Organismen als Quelle des Chitins für den erfindungsgemäßen Verbundwerkstoff dienen.

Das verwendete Chitin kann in Pulverform erworben werden oder aus gemörserten Krustazeenschalen (Krustentiere) wie z.B. Gammariden, Garnelen oder Shrimps (beispielsweise *Litopenaeus vannamei)* gewonnen werden.

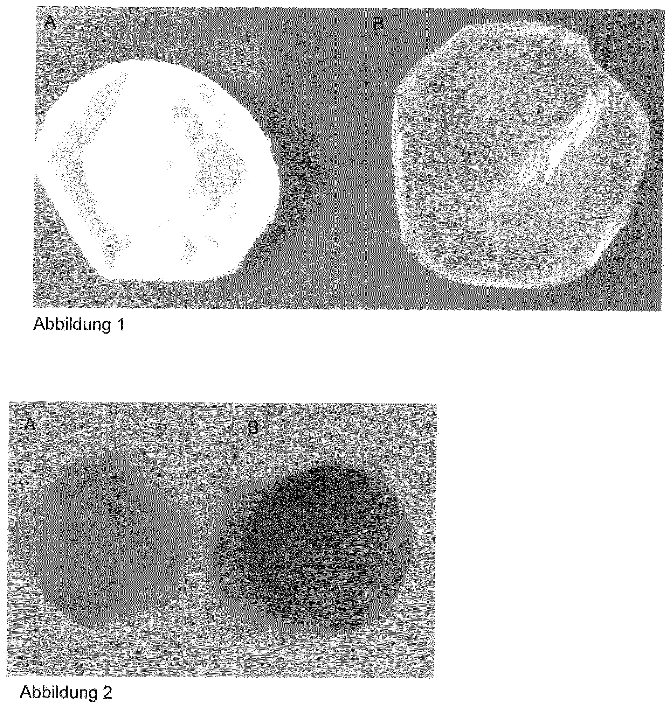

Chitin ist in Wasser nicht löslich. Daher wurde Chitinpulver in einer Mischung mit Wasser und Agarosepulver erhitzt. Chitin kann bis zu 180°C erhitzt werden, ohne dass ein Masseverlust zu erwarten ist. Während ein Biofilm bestehend aus Wasser und Agarose während des Trockenprozesses kollabiert, ist das nach Zugabe von Chitin mit einem Masseanteil von mindestens 0,05% nicht der Fall. Bei einem Verhältnis von 1:1 (Agarose (1,6%): Chitin (1,6%)) besitzt das Produkt lederartige Eigenschaften und ist weiß, bzw. hellgrau (Abb. 1A). Ein Biofilm mit einem Verhältnis 4:1 (Agarose (0,8%): Chitin (0,2%)) ist durchsichtig und verfügt über Papier-artige Eigenschaften (Abb. 1B).

Ein Gemisch aus 3,3% Geliermittel, mindestens 0,6% Chitin, mindestens 0,6% getrocknete Algenzellen und 0,6% getrocknete Cyanobakterien führt zu einem Plastikähnlichen Produkt, dass sehr flexibel ist (Abb.2).

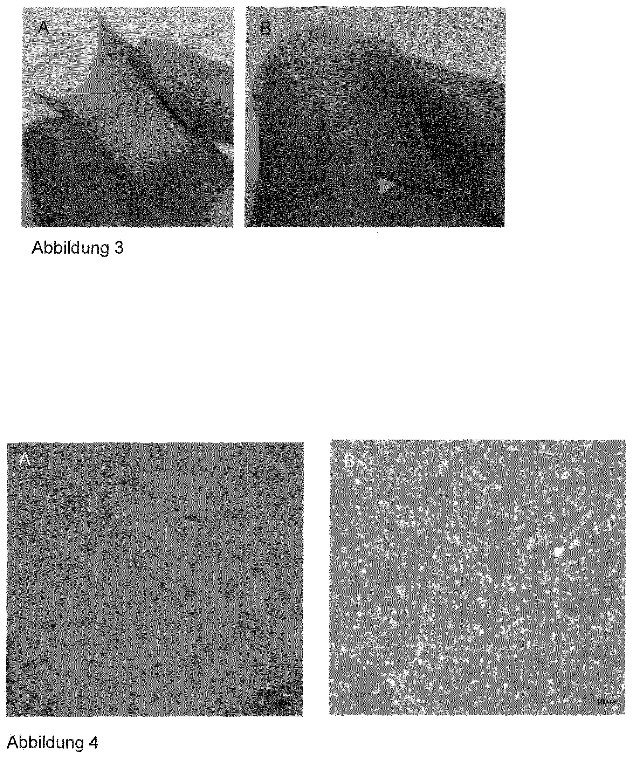

Tabelle 1 zeigt dabei beispielhafte Zusammensetzungen A bis G des Stoffgemischs für die Herstellung eines Verbundwerkstoffes. Jedes Stoffgemisch A bis G wird mit destilliertem Wasser auf 100 g (entspricht 100%) aufgefüllt. Die Verbundstoffe aus A, B und C sind biegsam und elastisch (Abbildung 2+3). Das Chitin in C ist aus selbst gewonnenen Crustazeen-Schalen gewonnen, während in allen anderen Ansätzen kommerziell erhältliches pulverförmiges Chitin verwendet wurde. Der Verbundstoff aus D ist kompakt, aber biegsam. Die Verbundstoffe aus E und F sind folien- bzw. lederartig. Der Verbundstoff aus G ist cellophanartig (Abbildung 1). Die aufgetragene Menge pro Quadratzentimeter (Dicke) und die Temperatur beim Austrocknen spielt für die Beschaffenheit des jeweiligen Verbundstoffes eine Rolle. Während langsames Austrocknen über mehrere Tage bei Raumtemperatur zu einem elastischen oder lederartigen Produkt führt, resultiert schnelleres Trocknen bei 37° C zwischen 2-12 h zu folienartigen oder Produkten mit hohem Härtegrad. Tabelle 1: Zusammensetzungen einzelner Ausführungsbeispiele des erfindungsgemäßen Stoffgemischs für die Herstellung eines Verbundwerkstoffes

| Rezeptur für 100 mL Wasser | Geliermittel in g | Algen in g | Cyanobakterien in g | Chitin in g |
|---|---|---|---|---|
| A | 3,3 | 0,8 | 0,8 | 0,2 |
| B | 3,3 | 0,6 | 0,6 | 0,6 |
| C | 3,3 | 1,6 | 1,6 | 0,05 |
| D | 3,0 | 0,01 | 0,01 | 3,0 |
| E | 1,6 | 0,01 | 0,01 | 1,6 |
| F | 1,6 | 0,01 | 0,01 | 0,8 |
| G | 0,8 | 0,01 | 0,01 | 0,2 |

Die Mengen der einzelnen Komponenten sind innerhalb der genannten Bereiche variabel und werden den Erfordernissen an den benötigten Verbundwerkstoff angepasst. Der Verbundwerkstoff kann als ein künstlicher Biofilm ausgestaltet sein, der nach Aushärtung nicht kollabiert und über eine Haltbarkeit von mindestens 42 Monaten bei Raumtemperatur und über eine hohe Flexibilität verfügt (Abbildungen 2+3).

Bei steigendem Chitinanteil und Abnahme des Agaroseanteils nimmt die Festigkeit des Werkstoffes zu.

Der Verbundwerkstoff, der unter Verwendung von Agarose, Chitin, Algen- und Cyanobakterien hergestellt wird, ist bis zu einem gewissen Grad reißfest, auf einer Seite glatt und glänzend und auf der Oberseite rau. Er kann mit einem feuchten Tuch gereinigt werden. Die Stabilität dieses Biofilms in wässriger Lösung wurde über einen Zeitraum von 6 Wochen mit einem Wasserbad getestet. Da die Festigkeit abnimmt, ist der Verbundwerkstoff für Anwendungen in trockner Umgebung geeignet. Er ist aber für Verarbeitungsprozessen mit kurzen Verweildauern in einer wässrigen geeignet. Unter Verwendung von vorzugsweise Agarose und Chitin mit nur sehr wenig Algen und Cyanobakterien (Zusammensetzung D, E, F und G aus Tabelle 1) entsteht eine Variante, die kunststoffähnlich ist aber papierähnliche Eigenschaften besitzt. Je nach Chitinanteil ist der Verbundwerkstoff weiß oder durchscheinend. Die Reißfestigkeit nimmt bei Verzicht auf Algen und Cyanobakterien ab. Daher wäre dieser Verbundwerkstoff eine Alternative zu Papier und könnte als Verpackungsmaterial für trockene Produkte (z.B. Teebeutel) dienen.

Die erfindungsgemäßen Verbundwerkstoffe stellen Kunststoffe dar und können dabei beispielsweise für Platinen, oder als Verpackungsmaterial für trockene Waren, als Papieralternative u.a. verwendet werden. Da der erfindungsgemäße Verbundwerkstoff durch geeignete Enzyme wie beispielsweise Chitinase abgebaut werden kann, sind bei der Verwendung des erfindungsgemäßen Verbundwerkstoffs für die Herstellung von Platinen die metallhaltigen Komponenten sehr gut und umweltschonend recycelbar, da nach dem enzymatischen Abbau der Platinen nur noch die Metalle übrigbleiben.

Die einzelnen Komponenten des erfindungsgemäßen Stoffgemischs für die Herstellung eines Verbundwerkstoffes stammen zum Großteil aus aquatischen Systemen bzw. sind Fischereiabfälle. Da alle Komponenten bereits bekannt sind und z.B. als Nahrungsergänzungsmittel verwendet werden, sind keine gesundheitsschädigenden Wirkungen des neuen Verbundwerkstoffes zu erwarten.

Zusammenfassend lässt sich der Gegenstand der Erfindung wie folgt definieren: Er umfasst ein Stoffgemisch für die Herstellung eines Verbundwerkstoffes umfassend die Komponenten Wasser, Geliermittel mit einem Massenanteil im Bereich von 0,01% bis 6%, Algen mit einem Massenanteil im Bereich von 0,01% bis 0,8%, Cyanobakterien mit einem Massenanteil im Bereich von 0,01% bis 0,8% und Chitin mit einem Massenanteil im Bereich von 0,05% bis 3,0%, wobei der Massenanteil des Wassers der Differenz zwischen der Summe der anderen Komponenten zu 100% entspricht.

Der Gegenstand der Erfindung umfasst weiterhin ein Stoffgemisch für die Herstellung eines Verbundwerkstoffes wie vorstehend beschrieben, dadurch gekennzeichnet, dass als Geliermittel Agarose eingesetzt wird.

Der Gegenstand der Erfindung umfasst weiterhin ein Stoffgemisch für die Herstellung eines Verbundwerkstoffes wie zuvor beschrieben, dadurch gekennzeichnet, dass als Geliermittel Pektin mit einem Massenanteil von 0,01 bis 0,3% eingesetzt wird.

Der Gegenstand der Erfindung umfasst weiterhin ein Stoffgemisch für die Herstellung eines Verbundwerkstoffes wie zuvor beschrieben, dadurch gekennzeichnet, dass als Geliermittel Agarose und Pektin eingesetzt werden.

Der Gegenstand der Erfindung umfasst weiterhin ein Stoffgemisch für die Herstellung eines Verbundwerkstoffes wie zuvor beschrieben, dadurch gekennzeichnet, dass Algen der Gattung Chlorella eingesetzt werden.

Der Gegenstand der Erfindung umfasst weiterhin ein Stoffgemisch für die Herstellung eines Verbundwerkstoffes wie zuvor beschrieben, dadurch gekennzeichnet, dass Cyanobakterien der Gattung Spirulina eingesetzt werden.

Der Gegenstand der Erfindung umfasst weiterhin ein Stoffgemisch für die Herstellung eines Verbundwerkstoffes wie zuvor beschrieben, dadurch gekennzeichnet, dass als Chitin das pulverisierte Chitin von Krustentieren eingesetzt wird.

Der Gegenstand der Erfindung umfasst weiterhin ein Stoffgemisch für die Herstellung eines Verbundwerkstoffes wie zuvor beschrieben, dadurch gekennzeichnet, dass weitere Zusatzstoffe zugefügt werden, ausgewählt aus der Liste anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit.

Der Gegenstand der Erfindung umfasst weiterhin ein Verfahren zur Herstellung eines Verbundwerkstoffes aus dem Stoffgemisch wie vorstehend beschrieben, umfassend die folgenden Schritte:
I. Bereitstellen der Komponenten Wasser, Geliermittel, Algen, Cyanobakterien und Chitin;
II. Mischen der in Schritt I bereitgestellten Komponenten miteinander, wobei eine Mischung der Komponenten erhalten wird;
III. Erhitzen der in Schritt II erhaltenen Mischung der Komponenten auf eine Temperatur im Bereich von 100 °C bis 130°C;
IV. Einbringen der in Schritt III erhitzten Mischung der Komponenten in wenigstens eine Form, wobei das Einbringen in die wenigstens eine Form durch Gie-βen, Sprühen oder Einpressen erfolgt;
V. Aushärten der in Schritt IV in wenigstens eine Form eingebrachten Mischung der Komponenten zu einem Verbundwerkstoff.

Alternativ werden in Schritt I weitere Zusatzstoffe zugefügt, ausgewählt aus der Liste anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit.

Der Gegenstand der Erfindung umfasst weiterhin einen Verbundwerkstoff, hergestellt aus dem Stoffgemisch wie zuvor beschrieben, umfassend die Komponenten Wasser, Geliermittel, Algen, Cyanobakterien und Chitin.

Der Gegenstand der Erfindung umfasst weiterhin einen Verbundwerkstoff wie im vorstehenden beschrieben, dadurch gekennzeichnet, dass er weitere Zusatzstoffe umfasst, wie anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit. Der Gegenstand der Erfindung umfasst weiterhin die Verwendung des Verbundwerkstoffes wie vorstehend beschrieben für die Herstellung von Platinen, Verpackungsmaterial, Papier, Fußbodenbelägen oder Einweggeschirr.

Der Gegenstand der Erfindung umfasst weiterhin die Verwendung des Verbundwerkstoffes gemäß vorstehender Beschreibung für die Herstellung eines gelartigen Verbandsmaterials oder eines Applikators für Medikamente auf Hautoberflächen.

### Herstellungsverfahren

Das Herstellungsverfahren für den erfindungsgemäßen Verbundwerkstoff umfasst die folgenden Schritte:

### I. Bereitstellen der Komponenten Wasser, Geliermittel, Algen, Cyanobakterien und Chitin

In diesem Schritt wird vorzugsweise das Geliermittel, die Algen, die Cyanobakterien und das Chitin in Pulverform verwendet, sodass diese sich gut mischen lassen. Es werden keinerlei Hilfsstoffe, Katalysatoren oder Enzyme benötigt. Der pH in den Ausgangsgemischen befand sich im Bereich von 5.1-8,8 und wird beispielsweise bei der Herstellung von Platinen eine Rolle spielen. Durch Variation des pH-Wertes, bei dem die Mischung hergestellt wird, kann die Löslichkeit der einzelnen Bestandteile in Grenzen eingestellt werden (z.B. infolge durch pH-Wert-Erhöhung oder -Erniedrigung einsetzende Deprotonierung oder Protonierung). Erfindungsgemäß reicht der pH-Bereich, innerhalb dessen die Mischung hergestellt wird, von pH=1 bis pH=13, bevorzugt von pH=3 bis pH=11, besonders bevorzugt von pH=5 bis pH=9, und ganz besonders bevorzugt von pH=6 bis pH=8. Insbesondere verbleiben bei pH=7 nach dem Herstellungsprozess keine Säure- oder Basenreste im Verbundwerkstoff, die - je nach Anwendung - nachteilig sein könnten. Es ist erfindungsgemäß möglich, die Bereitstellung der Komponenten bei einem pH-Wert ungleich pH=7 vorzunehmen, und während des Herstellungsprozesses in einem der nachfolgenden Schritte zusätzlich einen Neutralisierungsschritt vorzusehen, z.B. nachdem das Wasser zu 20, 30, 40, 50, 60, oder 70 Prozent entzogen wurde. Alternativ werden in Schritt I weitere Zusatzstoffe zugefügt, ausgewählt aus der Liste anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit.

### II. Mischen der in Schritt I bereitgestellten Komponenten miteinander, wobei eine Mischung der Komponenten erhalten wird

Dabei werden die festen Komponenten Geliermittel, Algen, Cyanobakterien und Chitin sowie alternativ die Zusatzstoffe (anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit) in das Wasser gegeben und mindestens 1 min lang verrührt. Die Mengen (Massen) der einzelnen Komponenten werden mit Wasser auf 100 g aufgefüllt. Bei Verwendung von Krustazeenschalen als Chitinquelle werden alle Komponenten in ein Homogenisationsgefäß mit Schikanen gegeben und homogenisiert, beispielsweise mit einem UltraTurax (TP 18/10; Janke & Kunkel KG). Dem Fachmann ist bekannt, dass Mischungsparameter (z.B. verwendetes Gerät bzw. Werkzeug, Temperatur, Art und Dauer) je nach Ausgangsmaterialien und gewünschtem Homogenisierungsgrad in weiten Bereichen schwanken können. Es fällt daher auch in den Umfang der Erfindung, den Mischvorgang in einem Temperaturbereich von 0°C bis 50°C, bevorzugt in einem Temperaturbereich von 10°C bis 40 °C, besonders bevorzugt in einem Temperaturbereich von 20 °C bis 30 °C, durchzuführen. Je nach Konsistenz der Mischung der bereitgestellten Komponenten (z.B. hoher Viskosität infolge niedrigen Wassergehaltes), kann die Durchmischung beispielsweise auch mittels eines Dreiwalzenstuhles erfolgen.

In Tabelle 2 sind beispielhafte Rezepturen A bis G zusammengestellt. Hierbei wird angegeben, wieviel von jeder festen Komponente auf je 100 g Wasser hinzugegeben wird. Aus Tabelle 2 können somit beispielhafte Zusammensetzungen des fertigen Verbundwerkstoffes nach Entzug des Wassers entnommen werden durch Berechnung der jeweils prozentualen Anteile jeder Komponente. Rezeptur A in Tabelle 2 führt beispielsweise zu einem wasserfreien Verbundwerkstoff der Zusammensetzung: 58,8 % Agarose, 5,9 % Pektin, 15,7 % Chlorella, 15,7 % Spirulina und 3,9 % Chitin. Rezeptur G in Tabelle 2 führt beispielsweise zu einem wasserfreien Verbundwerkstoff der Zusammensetzung: 78,43 % Agarose, 0,98 % Chlorella, 0,98 % Spirulina und 19,61 % Chitin. Allgemein können die prozentualen Anteile der einzelnen Komponenten im getrockneten Verbundwerkstoff (in derartiger Abhängigkeit voneinander, daß die jeweils für eine konkrete Kombination sich ergebende Summe exakt 100 Prozent beträgt) in folgenden Bereichen schwanken, wobei nicht explizit genannte Zwischenwerte in der genannten Intervallen mit umfasst sind:

| | |
|---|---|
| Agarose: | 45 % bis 80 % |
| Pektin: | 0 % bis 6 % |
| Chlorella: | 0,1 % bis 25 % |
| Spirulina: | 0,1 % bis 25 % |
| Chitin: | 0,5 % bis 50 % |

In den Beispielen der Tabelle 2 sind die Gehalte an Chlorella und Spirulina jeweils exakt gleich groß, was jedoch nicht zwingend der Fall sein muss.

**Tabelle 2: Mengenanteile der Komponenten für die Herstellung des erfindungsgemäßen Verbundwerkstoffes.**

| Rezeptur | Geliermittel in g | Chlorella in g | Spirulina in g | Chitin in g |
|---|---|---|---|---|
| A | 3,0 Agarose und 0,3 Pektin | 0,8 | 0,8 | 0,2 Pulver |
| B | 3,0 Agarose und 0,3 Pektin | 0,6 | 0,6 | 0,6 Pulver |
| C | 3,0 Agarose und 0,3 Pektin | 1,6 | 1,6 | 0,05 Schalen |
| D | 3,0 Agarose | 0,01 | 0,01 | 3,0 Pulver |
| E | 1,6 Agarose | 0,01 | 0,01 | 1,6 Pulver |
| F | 1,6 Agarose | 0,01 | 0,01 | 0,8 Pulver |
| G | 0,8 Agarose | 0,01 | 0,01 | 0,2 Pulver |

### III. Erhitzen der in Schritt II erhaltenen Mischung

Das Erhitzen der gemischten Komponenten erfolgt bei wenigstens 100° C und maximal bis 180° C bei einem Druck zwischen 0,1 MPa bis 1,0 MPa zwischen 15 min und 30 min. Dadurch werden die gemischten Komponenten autoklaviert. Chitin ist nicht löslich (auch nicht in gängigen Lösungsmitteln).

### IV. Einbringen der in Schritt III erhitzten Mischung der Komponenten in wenigstens eine Form, wobei das Einbringen in die wenigstens eine Form durch Gießen, Sprühen oder Einpressen erfolgt

Das Gemisch wird vor dem Einbringen in eine Form permanent geschüttelt und heiß verarbeitet, z.B. gegossen. Es kann dann bei unterschiedlichen Temperaturen (20° C bis 37° C) getrocknet werden.

Die entstehende Masse ist makroskopisch homogen. Mikroskopisch liegen Algen, Cyanobakterien und Chitin als feinverteilte Partikel in der Gelmatrix vor (Abb. 4).

### V. Aushärten der in Schritt IV in wenigstens eine Form eingebrachten Mischung der Komponenten zu einem Verbundwerkstoff

Das Aushärten erfolgt bevorzugt bei konstanter Temperatur (zwischen 20° C und 37° C) über einen Zeitraum zwischen 6 h bis 72 h. Durch die Erhöhung der Temperatur kann der Trocknungs- bzw. Aushärtungsprozess beschleunigt werden. Dazu können beispielsweise Wärmeschränke Klimakammern oder Wärmeplatten dienen. Durch den Trocknungsprozess wird dem Gemisch das Wasser komplett oder zumindest weitgehend entzogen und die Komponenten vernetzen sich chemisch und/oder physikalisch. Dem Fachmann ist bekannt, dass Polymere bei Umgebungsbedingungen oftmals wechselnde Mengen Wasser enthalten können (beispielweise Polyamid bis zu mehreren Prozent), die von den jeweiligen Umgebungsbedingungen (z.B. Temperatur, Luftfeuchte, Umgebungsdruck) anhängig sind. Dies gilt analog auch für den erfindungsgemäßen Verbundwerkstoff. Unter dem kompletten Entzug des Wassers wird daher verstanden, dass das Wasser unter den jeweils gewählten Trocknungsbedingungen so weit entzogen wird, bis keine weitere Trocknung des Verbundwerkstoffes innerhalb des vorgesehenen Zeitraumes mehr stattfindet, also z. B. bis zur Gewichtskonstanz oder einem anderen messtechnisch erfassbaren Wert zur Bestimmung des Wassergehalts. Dem Fachmann ist bekannt, dass auch der erfindungsgemäß getrocknete Verbundwerkstoff einen Restwassergehalt aufweisen kann. Der Trocknungsprozess kann erfindungsgemäß auf unterschiedliche Weise durchgeführt werden, beispielsweise auch mittels Gefriertrocknung oder Vakuumtrocknung. Darüber hinaus kann er auch in einem weiten Temperaturbereich zwischen -50 °C und + 200 °C durchgeführt werden. Der Trocknungsprozess kann gezielt auch so durchgeführt werden, dass ein definierter gewünschter Feuchtigkeitsgehalt bestehen bleibt (z.B. 1 %, 2 %, 3 %, 4 %, 5%, 6 %, 7 %, 8 %, 9 %, 10%, 11 %, 12 %, 13 %, 14 % oder 15 % Restfeuchte), bei dem der Verbundwerkstoff eine oder mehrere gewünschte Eigenschaften in einem bevorzugten Ausmaß aufweist.

Die Schritte IV und V können verfahrenstechnisch auch wenigstens teilweise miteinander kombiniert werden, beispielsweise in einem Extrusionsprozess, bei dem der ggf. vorgetrockneten Mischung geeigneter Konsistenz in einem Extruder zunächst das verbliebene Wasser so weit entzogen wird, dass eine Mischung vorliegt, deren Konsistenz es erlaubt, sie beispielsweise direkt per Spritzguss zu verarbeiten, so dass Formteile erhalten werden, die anschließend in bekannter Weise weiter getrocknet werden können, sofern dies erforderlich sein sollte.

Der Mengenbereich der verwendeten Komponenten für die erfindungsgemäßen Verbundwerkstoffe ist folgender: Agarose (0,8-3,0 g), Pektin (0,01-0,3 g), Spirulina (0,01-0,8 g), Chlorella (0,01-0,8 g) und Chitin (0,05-3,0 g) (Abbildungen 1+2).

Ein beispielhaftes Herstellungsverfahren wird im Folgenden beschrieben:
Die Komponenten werden in einem Mixer 1 min lange vermischt und in einem Autoklav bei 130° C und einem Überdruck von 1 bar für 20 min lang erhitzt. Alternativ kann ein Schnellkochtopf verwendet werden (30 min erhitzen bei 0,8 bar und 117° C). Der Verbundwerkstoff wird anschließend als Biofilm in Formen gegossen und kann bei Raumtemperatur aushärten. Alternativ kann der Aushärtungsprozess bei unterschiedlichen Temperaturen (z.B. in einem Wärmeschrank oder einer Wärmeplatte bei 37° C) beschleunigt werden. Dazu können Wärmeschränke oder Klimakammern dienen.

Der resultierende Verbundwerkstoff ist ein sogenannter Biokunststoff oder auch Bioplastik und besteht vorzugsweise aus Wasser, Agarose, Algen, Cyanobakterien und Chitin. Unter Zugabe von Pektin, Spirulina (Blaualge), Chlorella (Grünalge) oder Zellulose können die Eigenschaften und das Aussehen des Produktes modifiziert werden. Es können auch Pigmente dazugegeben werden, um die Farbe des Verbundwerkstoffes zu modifizieren oder andere Zusatzstoffe, um gewünschte Eigenschaften zu erreichen.

### Abbildungen

**Abbildung 1** zeigt Ausführungsbeispiele des erfindungsgemäßen Verbundwerkstoffes:
   Abbildung 1A zeigt einen Verbundwerkstoff mit 1,6 g Agarose + 1,6 g Chitin und Wasser, nachdem das Wasser komplett verdunstet ist.
   Abbildung 1B zeigt einen Verbundwerkstoff mit 0,8 g Agarose + 0,2 g Chitin und und Wasser, nachdem das Wasser komplett verdunstet ist.
**Abbildung 2** zeigt Ausführungsbeispiele des erfindungsgemäßen Verbundwerkstoffes:
   Abbildung 1A zeigt einen Verbundwerkstoff mit 3,0 g Agarose, 0,3 g Pektin, 0,6 g Chlorella, 0,6 g Spirulina und 0,2 g Chitinpulver.
   Abbildung 1B zeigt einen Verbundwerkstoff mit 3,0 g Agarose, 0,3 g Pektin, 0,8 g Chlorella, 0,8 g Spirulina und 0,05 g Chitinpulver,
**Abbildung 3** zeigt einen Flexibilitätstest des Verbundwerkstoffes bestehend aus den Komponenten Agarose, Pektin, Chitin, Spirolina, Chlorella und Wasser. Die Haltbarkeitsdauer beträgt mindestens 42 Monate bei Raumtemperatur.
**Abbildung 4****:**
   Die Abbildung 3 zeigt die mikroskopische Verteilung der Bestandteile im Verbundwerkstoff.
   Abbildung 3A zeigt einen Verbundwerkstoff bestehend aus Agarose, Pektin, Chitin, Algen, Cyanobakterien und Wasser, nachdem das Wasser verdunstet ist.
   Abbildung 3B zeigt einen Verbundwerkstoff bestehend aus Agarose und Chitin und Wasser, nachdem das Wasser verdunstet ist.

### Abkürzungen und Definitionen

**GlcNAc:** 2-Acetamido-2-desoxy-D-glucopyranose, N-Acetyl-D-glucosamin, aufgebaut aus Acetylglucosamin-Einheiten
**PHA:** Polyhydroxyalkanoat
**PHF:** Polyhydroxyfettsäure

## Patentansprüche

1. Stoffgemisch für die Herstellung eines Verbundwerkstoffes umfassend die Komponenten Wasser, Geliermittel mit einem Massenanteil im Bereich von 0,01% bis 6%, Algen mit einem Massenanteil im Bereich von 0,01% bis 0,8%, Cyanobakterien mit einem Massenanteil im Bereich von 0,01% bis 0,8% und Chitin mit einem Massenanteil im Bereich von 0,05% bis 3,0%, wobei der Massenanteil des Wassers der Differenz zwischen der Summe der anderen Komponenten zu 100% entspricht.

2. Stoffgemisch für die Herstellung eines Verbundwerkstoffes gemäß Anspruch 1, **dadurch gekennzeichnet, dass** als Geliermittel Agarose eingesetzt wird.

3. Stoffgemisch für die Herstellung eines Verbundwerkstoffes gemäß Anspruch 1, **dadurch gekennzeichnet, dass** als Geliermittel Pektin mit einem Massenanteil von 0,01 bis 0,3% eingesetzt wird.

4. Stoffgemisch für die Herstellung eines Verbundwerkstoffes gemäß Anspruch 1, **dadurch gekennzeichnet, dass** das Geliermittel Agarose und Pektin ist.

5. Stoffgemisch für die Herstellung eines Verbundwerkstoffes gemäß einem der vorhergehenden Ansprüche, **dadurch gekennzeichnet, dass** Algen der Gattung Chlorella eingesetzt werden.

6. Stoffgemisch für die Herstellung eines Verbundwerkstoffes gemäß einem der vorhergehenden Ansprüche, **dadurch gekennzeichnet, dass** Cyanobakterien der Gattung Spirulina eingesetzt werden.

7. Stoffgemisch für die Herstellung eines Verbundwerkstoffes gemäß einem der vorhergehenden Ansprüche, **dadurch gekennzeichnet, dass** als Chitin das pulverisierte Chitin von Krustentieren eingesetzt wird.

8. Stoffgemisch für die Herstellung eines Verbundwerkstoffes gemäß einem der vorhergehenden Ansprüche, **dadurch gekennzeichnet, dass** das Stoffgemisch weitere Zusatzstoffe umfasst, ausgewählt aus der Liste anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit.

9. Verfahren zur Herstellung eines Verbundwerkstoffes aus dem Stoffgemisch gemäß einem der vorhergehenden Ansprüche umfassend die folgenden Schritte:
I. Bereitstellen der Komponenten Wasser, Geliermittel, Algen, Cyanobakterien und Chitin;
II. Mischen der in Schritt I bereitgestellten Komponenten miteinander, wobei eine Mischung der Komponenten erhalten wird;
III. Erhitzen der in Schritt II erhaltenen Mischung der Komponenten auf eine Temperatur im Bereich von 100 °C bis 130°C;
IV. Einbringen der in Schritt III erhitzten Mischung der Komponenten in wenigstens eine Form, wobei das Einbringen in die wenigstens eine Form durch Gie-βen, Sprühen oder Einpressen erfolgt;
V. Aushärten der in Schritt IV in wenigstens eine Form eingebrachten Mischung der Komponenten zu einem Verbundwerkstoff.

10. Verfahren zur Herstellung eines Verbundwerkstoffes aus dem Stoffgemisch gemäß Anspruch 9, **dadurch gekennzeichnet, dass** in Schritt I Zusatzstoffe beigefügt werden, ausgewählt aus der Liste anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit.

11. Verbundwerkstoff, hergestellt aus dem Stoffgemisch gemäß der Ansprüche 1 bis 7 und dem Verfahren gemäß Anspruch 9 umfassend die Komponenten Wasser, Geliermittel, Algen, Cyanobakterien und Chitin.

12. Verbundwerkstoff, , hergestellt aus dem Stoffgemisch gemäß der Ansprüche 1 bis 8 und dem Verfahren gemäß der Ansprüche 9 und 10 umfassend die Komponenten Wasser, Geliermittel, Algen, Cyanobakterien und Chitin sowie die Zusatzstoffe anorganische Pigmente, organische Pigmente, Farbstoffe, antimikrobielle Zusatzstoffe, Silberionen, Silber-Nanopartikel, Ethanol, Antibiotika, Fungizide, Antioxidantien, Schutzstoffe gegen UV-Strahlung, Schutzstoffe gegen Feuchtigkeit.

13. Verwendung des Verbundwerkstoffes gemäß Anspruch 11 oder 12 für die Herstellung von Platinen, Verpackungsmaterial, Papier, Fußbodenbelägen, Einweggeschirr.

14. Verwendung des Verbundwerkstoffes gemäß Anspruch 11 oder 12 für die Herstellung eines gelartigen Verbandsmaterials oder eines Applikators für Medikamente auf Hautoberflächen.
